# EUROPEAN PATENT SPECIFICATION

(11) **EP 1 438 807 B1**
(45) Date of publication and mention of the grant of the patent: **13.09.2006**
(21) Application number: 02741091.9
(22) Date of filing: 26.06.2002
(51) Int. Cl.: H04L 12/28, H04N 7/24, H04L 12/64, H04L 12/24

(54) **MANAGER POSTS SHORTLIST BASED ON CONTINGENCY**
VERWALTER DER EINE PARAMETERABHÄNGIGE BEGRENZTE STATIONSLISTE VERTEILT
LISTE RESTREINTE DE COMMUNICATIONS DE GESTIONNAIRE EN FONCTION DE VARIABLES DE CONTINGENCE

(30) Priority: 27.07.2001 EP 01202871
(43) Date of publication of application: 21.07.2004
(73) Proprietor: Koninklijke Philips Electronics N.V., 5621 BA Eindhoven (NL)
(72) Inventor: GUILLORIT, Fabien M. J., Int. Octrooibureau B.V., NL-5656 AA Eindhoven (NL)
(74) Representative: van der Veer, Johannis Leendert
(86) International application number: PCT/IB2002/002666
(87) International publication number: WO 2003/013058

(56) References cited:
- EP-A- 1 089 497
- US-A- 5 724 517

## Description

The invention relates to a method for controlling a multi-station network, to resume operating after a bus reset according to the preamble of claim 1. One common cause for the occurring of such resets, in particular in networks used in relatively uncontrolled environments such as private households, is the adding or removing of a node or station. Indeed, a particular embodiment such as an IEEE 1394 and HAVi standardized network is often used for effecting various audio/video functionalities in a private household. The stations will then represent various device types, such as tuners, players, television sets, settop boxes, and the like, and the adding, moving, removing, or substituting of the various devices is commonplace, and which will then cause a bus reset.

The prior art sections of documents EP1089497 and US5724517 show the conventional procedure for reinitialization of an IEEE 1394 bus network after reset and the sharing of device information. The inventions presented in these documents relate respectively to an extension of this sharing t bridged busses and to the building of a topology map.

Before resuming operations after the reset, all devices should check the various node ID's and GUID's and other key information, inasmuch these informations could have been changed. Now, a particular network configuration could comprises a wide range of station capabilities: stations may range from high-speed state of the art digital processors to slow electrical or electromechanical devices, where the proper operating could depend on some mechanical spin-up delay or the like. The inventor has recognized that in many cases a skeleton network configuration could resume operating after a brief delay for effectively rendering a subset of all network functions that would nevertheless be highly useful. If a device were not accessible during this phase, it could be ignored. On the other hand, the complete intended function of the network could in general not be attained with the leaving out of any of the various stations at all. Waiting for the slowest node or station to respond could mean to necessitate an appropriately long interval. Moreover, such slow device could even have been removed, and it such case, it would indeed never respond at all.

In consequence, amongst other things, it is an object of the present invention to let a configuration management server acquire a preliminary list of all active devices by their node ID, their GUID, and such additional information as appropriate. Another object of the invention is to allow the network to resume operation within a relatively brief delay, whilst on the other hand providing that slow devices would not be left behind unable to join the network. A further advantage would be that single-manufacturer devices are relieved from the burden of rediscovering the whole network setup, so that they could focus their attention to stations from another manufacturer that might only partly conform to the standards applied by the first single manufacturer in question. The relieving from the above necessity will also diminish the bus traffic, so that effectively, the network bandwidth is raised. A final advantage of the present invention is that the mechanism of the present invention does not cause any inappropriate overhead to the configuration manager server, as compared to a situation wherein all stations would have to take part in the rediscovery operation. Also, a specific memory range can be allocated for this setting-up purpose, so that also devices with less than full HAVi functionality will be able to take part.

Now therefore, according to one of its aspects the invention is defined by a method according to Claim 1. The contingency variables could represent one or more preset delay values or a particular number of responding stations, or a combination thereof. The particular number could represent a particular fraction of the number of stations present in the situation before the reset occurring. Another criterium could be that the list of the responding stations would be enough to help devices to restore pre-existing communications and streams with each other.

The invention also relates to a system as claimed in Claim 7, and to a station as claimed in Claim 9. Further advantageous aspects of the invention are recited in dependent Claims.

These and further aspects and advantages of the invention will be discussed more in detail hereinafter with reference to the disclosure of preferred embodiments, and in particular with reference to the appended Figures that show:
Figure 1, a prior art network configuration according to the IEEE 1394 standard;
Figure 2, a flow chart of a listing procedure according to the present invention.

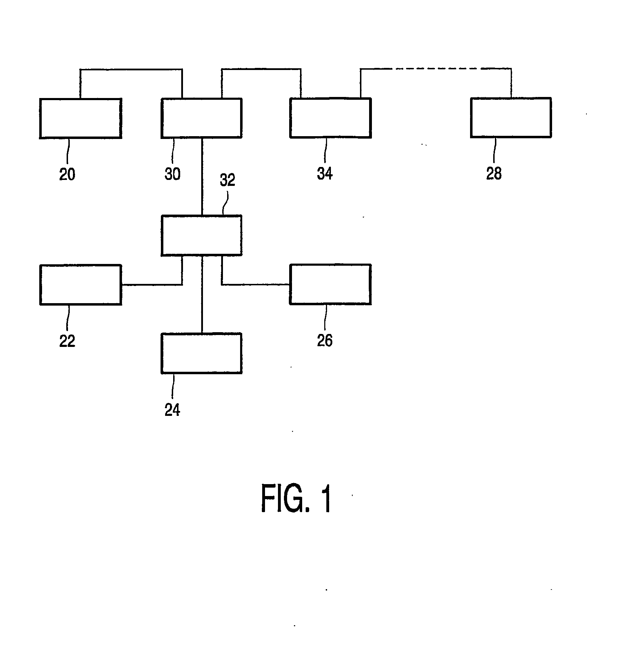

Figure 1 illustrates a prior art network configuration according to the IEEE 1394 standard, comprising singular connected stations or nodes 20, 22, 26, 28 and multiple connected nodes 30, 32, 34. In particular, European Patent Application EP 0 933 900 A2 discloses a bridge facility for the particular network protocol. For the remainder the skilled art person will be aware of many sources for information on this protocol, so that further discussion is omitted for the sake of brevity. The present invention may however be practiced under various other bus protocols.

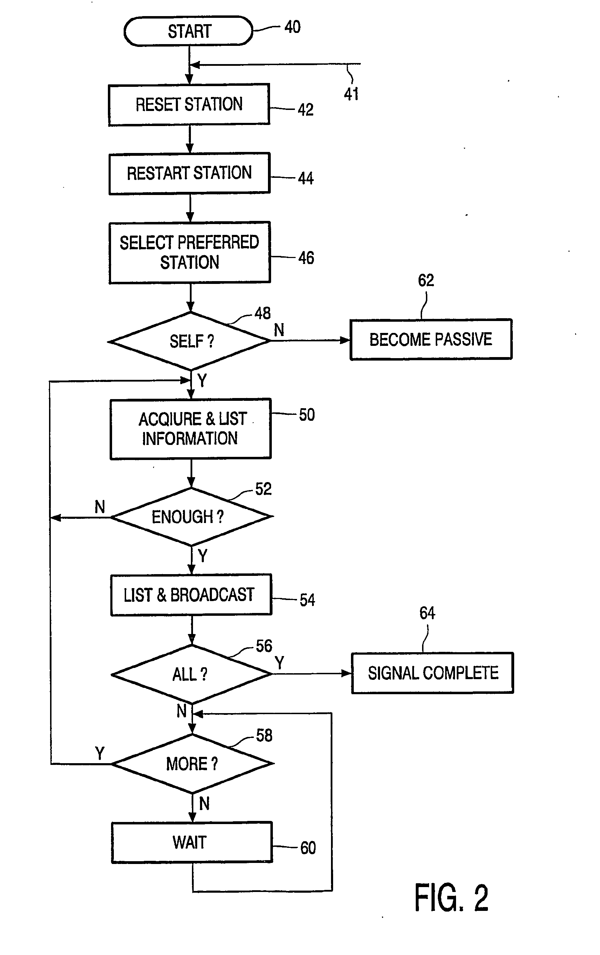

Figure 2 illustrates a flow chart of a listing procedure according to the present invention as executed in a particular station. Of course, in a bus organization, the various stations will each operate in parallel along similar lines. In block 40, the procedure commences by claiming as far as necessary, hardware and software facilities. In block 42, a network reset condition is detected, which step as indicated by arrow 41 may be activated through another station not shown. In block 42, the station is furthermore actually reset. Next, the station is restarted in block 44. In particular, it will set aside a particular specific memory range. If the station in question has the ability to act as a configuration management server, it will try to effectively become one. Generally, various stations in parallel may be provided with the necessary facilities for this purpose. This trying may be effected in a similar manner as is commonly used to determine an acting bus master. In general, this is effected in that the contending stations will each send particular signalization patterns, on which patterns the bus will effect some logic function, such as an OR-function, or the like. The final outcome of the logic function can be detected in each station, and the resulting pattern will immediately point to the winner station. Generally although not necessarily, such will be the most powerful among the contending stations. For brevity, such is not explained in more detail here. Note that the configuration management server could be a different station from the one acting as such before the reset: the latter could have been removed or replaced, and/or the new configuration management server could have been freshly connected to the system.

In block 48, each applicable station detects whether it is itself the preferred station. If not, it will in block 62 become passive. Such a passive station would thereupon communicate the necessary informations exclusively with the configuration management server, until the latter would post the list of informations from which the passive station could again know the network configuration and if applicable and possible, resume a communication operation or pattern that existed before the reset signalization that started the procedure according to the present invention. For brevity, the operations by the passive station(s) until the receiving of the configuration management server's list have not been discussed further. The same applies to stations that lack the facility to act as a configuration management server. It has been understood that at least one station could act as a configuration managment server. Otherwise, the system would remain stalled.

In block 50, the actual configuration management server station will acquire and list the information regarding the network. In block 52, it will judge whether the requirement to the applicable contingency variable or variables will have been met, such as a preset time delay, or a number of station signalizations will have been acquired, or a combination thereof. If not yet, a waiting loop goes back to block 50. If positive in block 52, the configuration management server station will set up a list of the information acquired and broadcast it to the other stations. In block 56, the configuration management server station will judge whether all stations on the network have sent their information. If negative, the configuration management server station will go to blocks 58 and 60 that effectively constitute a waiting loop for the still remaining stations. If they will give signs of life or if another relaxing of the applicable contingency variables is applied, the list (block 50) will get extented, until eventually, the system will signal completion in block 64. If applicable, the completion may take an infinitely long time, because there may be silent stations.

For brevity, various further aspects have been ignored, such as the occurrence of a further reset condition during the execution of the flow chart. In this context, persons skilled in the art will recognize various changes and amendments that should be construed to form part of the present invention, unless they would exceed the scope of the appended Claims.

## Claims

1. A method for controlling a multi-station bus network to resume operating after a bus reset, said method comprising the steps of:
- in at least one station of the bus network, detecting a bus reset signalization;
- in at least one, hereinafter called configuration management server, of said at least one station, undertaking to act as a configuration management server;
said method being **characterized in that** it further comprises the steps by said configuration management server of:
- acquiring in an initial cycle a preliminary list of all station node ID's as based on one or more contingency variables and posting said preliminary list on the bus network, said contingency variables representing at least one of:
- a preset delay value;
- a particular number of responding stations; or
- a list of responding stations which would be enough to help devices to restore pre-existing communications and streams with each other;
or a particular combination thereof;
- and in one or more further following cycles successively relaxing said one or more contingency variables and posting extended versions of said list.

2. A method as claimed in claim 1, wherein said acting as a configuration management server is based on an eventual outcome of an election procedure through exchanging of bus signalizations among plural stations.

3. A method as claimed in claim 1, wherein a most powerful station will act as configuration management server.

4. A method as claimed in claim 1, wherein said posting includes a request to a specific memory range applicable to the station in question.

5. A method as claimed in claim 4, wherein stations will monitor said specific memory range and will wait for the list from the configuration management server.

6. A method as claimed in claim 1, wherein said stations include both HAVi and non-HA Vi-stations.

7. A system being arranged for implementing a method as claimed in claim 1 for controlling a multi-station bus network to resume operating after a bus reset, said system comprising:
- in at least one station of the bus network, detecting means for detecting a bus reset signalization;
- in at least one, hereinafter called configuration management server, of said at least one station, control means being arranged for undertaking to act as a configuration management server;
said system being **characterized in that** it further comprises, in said configuration management server:
- data processing means for acquiring in an initial cycle a preliminary list of all station node ID's as based on one or more contingency variables and posting said preliminary list on the bus, said contingency variables representing at least one of:
- a preset delay value;
- a particular number of responding stations; or
- a list of responding stations which would be enough to help devices to restore pre-existing communications and streams with each other;
or a particular combination thereof;
- and relax means for in one or more further following cycles successively relaxing said one or more contingency variables and posting extended versions of said list.

8. A system as claimed in claim 7, and being based on an IEEE 1394 bus protocol.

9. A station being arranged for implementing a method as claimed in claim 1 for controlling a multi-station bus network to resume operating after a bus reset in a system as claimed in claim 7, said station comprising:
- detecting means for detecting a bus reset signalization;
- control means being arranged for undertaking to act as a configuration management server;
the station being **characterized** to further comprise:
- data processing means for acquiring in an initial cycle a preliminary list of all station node ID's as based on one or more contingency variables and posting said preliminary list on the bus, said contingency variables representing at least one of:
- a preset delay value;
- a particular number of responding stations; or
- a list of responding stations which would be enough to help devices to restore pre-existing communications and streams with each other;
or a particular combination thereof;
- and relax means for in one or more further following cycles successively relaxing said one or more contingency variables and posting extended versions of said list.

## Patentansprüche

1. Verfahren zur Steuerung eines Busnetzwerkes mit mehreren Stationen zum wieder Aufnehmen des Betriebs nach einer Busrückstellung, wobei das genannte Verfahren die nachfolgenden Schritte umfasst:
- in wenigstens einer Station des Busnetzwerkes das Detektieren einer Busrückstellungssignalisierung;
- in wenigstens einem, nachstehend als Konfigurationsverwaltungsserver bezeichneten Server der genannten, wenigstens einen Station die Verpflichtung eingehen, als Konfigurationsverwaltungsserver wirksam zu sein;
wobei das genannte Verfahren **dadurch gekennzeichnet ist, dass** es weiterhin die nachfolgenden von dem genannten Konfigurationsverwaltungsserver durchgeführten Verfahrensschritte umfasst:
- das in einen Anfangszyklus Erwerben einer vorläufigen Liste aller Stationsknoten-IDs auf Basis eines oder mehrerer Zufallsvariablen und die vorläufige Liste über das Busnetzwerk verteilt, wobei die Zufallsvariablen wenigstens eines der nachfolgenden Elemente darstellen:
- einen voreingestellten Verzögerungswert;
- eine bestimmte Anzahl antwortender Stationen, oder
- eine Liste antwortender Stationen, die ausreichen würde um Anordnungen zu helfen vorher bestehende Kommunikationen und Ströme wieder herzustellen;
oder eine bestimmte Kombination derselben;
- und in einem oder mehreren nachfolgenden Zyklen das aufeinander folgende Entspannen des genannten einen oder mehrerer Variablen und das Verteilen bestehender Versionen der genannten Liste.

2. Verfahren nach Anspruch 1, wobei das genannte Wirken als Konfigurationsverwaltungsserver auf einem etwaigen Ergebnis einer Wahlprozedur basiert durch Austausch von Bussignalisierungen unter den vielen Stationen.

3. Verfahren nach Anspruch 1, wobei eine sehr starke Station als Konfigurationsverwaltungsserver wirksam ist.

4. Verfahren nach Anspruch 1, wobei die genannte Verteilung einen Antrag an den spezifischen Speicherbereich umfasst, der auf die betreffende Station anwendbar ist.

5. Verfahren nach Anspruch 4, wobei Stationen den genannten spezifischen Speicherbereich überwachen werden und auf die Liste von dem Konfigurationsverwaltungsserver warten.

6. Verfahren nach Anspruch 1, wobei die genannten Stationen HAVI- und Nicht-HAVI-Stationen umfassen.

7. System zum Implementieren eines Verfahrens nach Anspruch 1 zur Steuerung eines Busnetzwerkes mit mehreren Stationen um den Betrieb nach einer Busrückstellung fortzusetzen, wobei das genannte System Folgendes umfasst:
- in wenigstens einer Station des Busnetzwerkes Detektionsmittel zum Detektieren einer Busrückstellungssignalisierung,
- in wenigstens einem Server, nachstehend als Konfigurationsverwaltungsserver bezeichnet, der genannten wenigstens einen Station, Steuermittel, vorgesehen um als Konfigurationsverwaltungsserver wirksam zu sein,
wobei das genannte System **dadurch gekennzeichnet ist, dass** es weiterhin in dem genannten Konfigurationsverwaltungsserver Folgendes umfasst:
- Datenverarbeitungsmittel um in einem Anfangszyklus eine vorläufige Liste aller Stationsknoten-IDs anzufordern, auf Basis einer oder mehrerer Variablen und um die genannte vorläufige Liste über den Bus zu verteilen, wobei die genannten Variablen wenigstens eines der nachfolgenden Elemente darstellen:
- einen voreingestellten Verzögerungswert,
- eine bestimmte Anzahl antwortender Stationen, oder
- eine Liste antwortender Stationen, die ausreichen würde um Anordnungen zu helfen vorher bestehende Kommunikationen und Ströme wieder herzustellen;
oder eine bestimmte Kombination derselben;
- und Entspannungsmittel um in einem oder mehreren nachfolgenden Zyklen nacheinander den genannten einen oder mehrere Variablen zu entspannen und bestehende Versionen der genannten Liste zu verteilen.

8. System nach Anspruch 7, auf Basis eines IEEE 1394-Busprotokolls.

9. Station vorgesehen zum Implementieren eines Verfahrens nach Anspruch 1 zur Steuerung eines Busnetzwerkes mit mehreren Stationen um den Betrieb nach einer Busrückstellung fortzusetzen, nach Anspruch 7, wobei das genannte System Folgendes umfasst:
- Detektionsmittel zum Detektieren einer Busrückstellungssignalisierung,
- Steuermittel, vorgesehen um als Konfigurationsverwaltungsserver wirksam zu sein,
wobei die Station **dadurch gekennzeichnet ist, dass** sie weiterhin Folgendes umfasst:
- Datenverarbeitungsmittel um in einem Anfangszyklus eine vorläufige Liste aller Stationsknoten-IDs anzufordern, auf Basis einer oder mehrerer Variablen und um die genannte vorläufige Liste über den Bus zu verteilen, wobei die genannten Variablen wenigstens eines der nachfolgenden Elemente darstellen:
- einen voreingestellten Verzögerungswert,
- eine bestimmte Anzahl antwortender Stationen, oder
- eine Liste antwortender Stationen, die ausreichen würde um Anordnungen zu helfen vorher bestehende Kommunikationen und Ströme wieder herzustellen;
oder eine bestimmte Kombination derselben;
- und Entspannungsmittel um in einem oder mehreren nachfolgenden Zyklen nacheinander den genannten einen oder mehrere Variablen zu entspannen und bestehende Versionen der genannten Liste zu verteilen.

## Revendications

1. Procédé pour enjoindre à un réseau à bus multistation de recommencer à fonctionner après une remise à l'état initial du bus, ledit procédé comprenant les étapes suivantes :
- dans une station au moins du réseau à bus, la détection d'une signalisation de remise à l'état initial du bus ;
- dans une au moins, appelée ci-après serveur de gestion de configuration, de ladite au moins une station, le fait d'entreprendre de faire office de serveur de gestion de configuration ;
ledit procédé étant **caractérisé en ce qu'**il comprend en outre les étapes, exécutées par ledit serveur de gestion de configuration, suivantes :
- l'acquisition dans un cycle initial d'une liste préliminaire de tous les identificateurs de noeuds de la station sur la base d'une ou de plusieurs variables de contingence et la publication de ladite liste préliminaire sur le réseau à bus, lesdites variables de contingence représentant au moins un élément parmi le groupe suivant :
- une valeur de retard prédéterminée ;
- un nombre particulier de stations ayant répondu, ou
- une liste de stations ayant répondu qui serait suffisante pour aider des dispositifs à rétablir des communications et des flux préexistants entre eux ;
ou une combinaison particulière de ceux-ci ;
- et dans un ou plusieurs cycles suivants supplémentaires, l'assouplissement successif desdites une ou plusieurs variables de contingence et la publication de versions
étendues de ladite liste.

2. Procédé suivant la revendication 1, dans lequel ledit fait de faire office de serveur de gestion de configuration est basé sur un résultat éventuel d'une procédure de choix par l'échange de signalisations par bus entre plusieurs stations.

3. Procédé suivant la revendication 1, dans lequel la station la plus puissante fait office de serveur de gestion de configuration.

4. Procédé suivant la revendication 1, dans lequel ladite publication comprend une demande pour un espace de mémoire spécifique applicable à la station en question.

5. Procédé suivant la revendication 4, dans lequel les stations contrôlent ledit espace de mémoire spécifique et attendent la liste en provenance du serveur de gestion de configuration.

6. Procédé suivant la revendication 1, dans lequel lesdites stations incluent à la fois des stations HAVi et non HAVi.

7. Système à même de mettre en oeuvre un procédé suivant la revendication 1 pour enjoindre à un réseau à bus multistation de recommencer à fonctionner après une remise à l'état initial du bus, ledit système comprenant :
- dans une station au moins du réseau à bus, des moyens de détection pour détecter une signalisation de remise à l'état initial du bus ;
- dans une au moins, appelée ci-après serveur de gestion de configuration, de ladite au moins une station, des moyens de commande à même d'entreprendre de faire office de serveur de gestion de configuration ;
ledit système étant **caractérisé en ce qu'**il comprend en outre, dans ledit serveur de gestion de configuration :
- des moyens de traitement de données pour acquérir dans un cycle initial une liste préliminaire de tous les identificateurs de noeuds de la station sur la base d'une ou de plusieurs variables de contingence et la publication de ladite liste préliminaire sur le bus, lesdites variables de contingence représentant au moins un élément parmi le groupe suivant :
- une valeur de retard prédéterminée ;
- un nombre particulier de stations ayant répondu, ou
- une liste de stations ayant répondu qui serait suffisante pour aider des dispositifs à rétablir des communications et des flux préexistants entre eux ;
ou une combinaison particulière de ceux-ci ;
- et des moyens d'assouplissement pour dans un ou plusieurs cycles suivants supplémentaires, assouplir successivement lesdites une ou plusieurs variables de contingence et publier des versions étendues de ladite liste.

8. Système suivant la revendication 7, basé sur un protocole de bus IEEE 1394.

9. Station à même de mettre en oeuvre un procédé suivant la revendication 1 pour enjoindre à un réseau à bus multistation de recommencer à fonctionner après une remise à l'état initial du bus dans un système suivant la revendication 7, ladite station comprenant :
- des moyens de détection pour détecter une signalisation de remise à l'état initial du bus ;
- des moyens de commande à même d'entreprendre de faire office de serveur de gestion de configuration ;
la station étant **caractérisée en ce qu'**elle comprend en outre :
- des moyens de traitement de données pour acquérir dans un cycle initial une liste préliminaire de tous les identificateurs de noeuds de la station sur la base d'une ou de plusieurs variables de contingence et la publication de ladite liste préliminaire sur le bus, lesdites variables de contingence représentant au moins un élément parmi le groupe suivant :
- une valeur de retard prédéterminée ;
- un nombre particulier de stations ayant répondu, ou
- une liste de stations ayant répondu qui serait suffisante pour aider des dispositifs à rétablir des communications et des flux préexistants entre eux ;
ou une combinaison particulière de ceux-ci ;
- et des moyens d'assouplissement pour dans un ou plusieurs cycles suivants supplémentaires, assouplir successivement lesdites une ou plusieurs variables de contingence et publier des versions étendues de ladite liste.
